# EUROPEAN PATENT APPLICATION

(11) **EP 3 617 561 A1**
(43) Date of publication of application: **04.03.2020**
(21) Application number: 19194095.6
(22) Date of filing: 28.08.2019
(51) Int. Cl.: F16H 61/22, F16H 59/02, F16H 59/10

(54) **GEARSHIFT LEVER DEVICE**

(30) Priority: 31.08.2018 JP 2018162606
(71) Applicant: Fuji Kiko Co., Ltd., Shizuoka 431-0431 (JP)
(72) Inventor: MATSUMOTO, Akio, Kosai-shi, Shizuoka 431-0431 (JP); TAKIKAWA, Yoshihiro, Kosai-shi, Shizuoka 431-0431 (JP); KUBOTA, Katsushi, Kosai-shi, Shizuoka 431-0431 (JP); HAKAMATA, Takumi, Kosai-shi, Shizuoka 431-0431 (JP)
(74) Representative: Grünecker Patent- und Rechtsanwälte PartG mbB

(57) **Abstract**

A gearshift lever device of this invention includes: a shift-lock lever that restricts a downward movement of a position pin when the gearshift lever is in a parking position; and a forcible release lever that presses a second arm and thereby forcibly rotates the shift-lock lever to allow the position pin to move downward. The forcible release lever includes a pressing portion that presses the second arm. The pressing portion includes a first corner portion that presses a position away from the rotational center of the shift-lock lever and a second corner portion that presses a position closer to the rotational center of the shift-lock lever than the position pressed by the first corner portion. When the pressing portion presses the second arm, the first corner portion first comes into contact with the second arm first and thereafter the second corner portion comes into contact with the second arm.

## Description

### Technical Field

The present invention relates to a gearshift lever device including a shift-lock mechanism.

### Background Art

There has been known a gearshift lever device that includes a shift-lock mechanism that disables operations of a gearshift lever by prohibiting an operation of an operation button on the gearshift lever while the gearshift lever is in a parking position (see Japanese Patent Application Publication No. H11-301295). In a state where shift-lock is released, a compression rod is moved downward with a position pin in the gearshift lever by operating the operation button. In a state where the shift-lock is working, the position pin is in contact with a shift-lock lever and restricts the downward movement of the compression rod.

### Summary

In the shift-lock mechanism, the shift-lock is released by an actuator only when a brake pedal is stepped down at the start-up of an engine. However, there is a case where the shift-lock is forcibly released by manually pushing a release rod instead of activating the actuator. In this case, some configurations of the gearshift lever device have difficulty in forcibly releasing the shift-lock due to unavailability of an enough space for a moving distance of the release rod.

In view of this, the object of the present invention is to enable forcible release of shift-lock even in a case where an enough space for a sufficient moving distance of a forcible release lever is unavailable.

A gearshift lever device according to an aspect of the present invention includes: a position pin that is moved downward inside a position gate formed in a housing by operation of an operation portion formed on a gearshift lever and that enables a shift operation of the gearshift lever; a shift-lock lever that is rotatably mounted in the housing and restricts the position pin, which comes into contact with the shift-lock lever from the above, from moving downward when the gearshift lever is in a parking position; and a forcible release lever that forcibly rotates the shift-lock lever and allows the position pin to be moved downward by pressing a pressed portion extending in a direction away from a rotational center of the shift-lock lever. The forcible release lever includes a pressing portion that presses the pressed portion. The pressing portion includes a first pressing portion that presses a position away from the rotational center of the shift-lock lever and a second pressing portion that presses a position closer to the rotational center of the shift-lock lever than the position pressed by the first pressing portion. When the pressing portion presses the pressed portion, the second pressing portion comes into contact with the pressed portion after the first pressing portion comes into contact with the pressed portion.

According to a gearshift lever device of an aspect of the present invention, it is possible to enable forcible release of shift-lock even in a case where an enough space for a sufficient moving distance of a forcible release lever is unavailable.

### Brief Description of Drawings

Fig. 1 is a perspective view that illustrates inside of a housing of a gearshift lever device according to an embodiment of the present invention.
Fig. 2 is an exploded perspective view of the gearshift lever device in Fig. 1.
Fig. 3A is a side view of a shift-lock lever used in the gearshift lever device in Fig. 1.
Fig. 3B is a right side view of Fig. 3A.
Fig. 3C is a right side view of Fig. 3B.
Fig. 4A is a perspective view of a damper used in the gearshift lever device in Fig. 1.
Fig. 4B is a plan view of the damper illustrated in Fig. 4A.
Fig. 4C is a front view of the damper illustrated in Fig. 4B.
Fig. 5 is a side view of a forcible release lever used in the gearshift lever device in Fig. 1.
Fig. 6 is an explanatory view that illustrates a positional relationship between a pressing portion of the forcible release lever and a second arm of the shift-lock lever.
Fig. 7A is an operation explanatory view that illustrates a state where the forcible release lever is moved downward from the state of Fig. 6 and a first corner portion is in contact with the second arm of the shift-lock lever.
Fig. 7B is an operation explanatory view that illustrates a state where the forcible release lever is further moved downward from the state of Fig. 7A and a pressing surface of the pressing portion is in contact with the second arm of the shift-lock lever.
Fig. 7C is an operation explanatory view that illustrates a state where the forcible release lever is further moved downward from the state of Fig. 7B and only a second corner portion of the pressing portion is in contact with the second arm of the shift-lock lever.

### Description of Embodiments

An embodiment of the present invention is described below in detail with reference to the drawings.

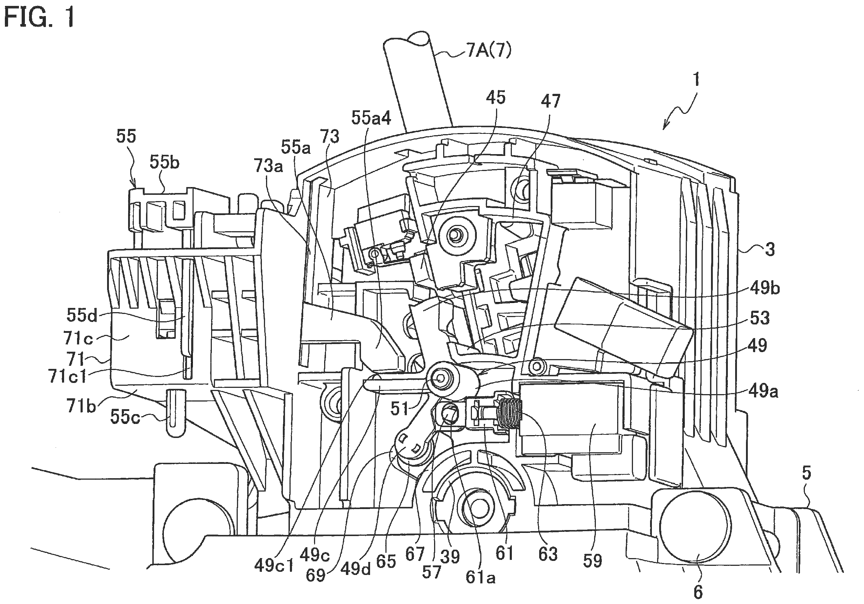

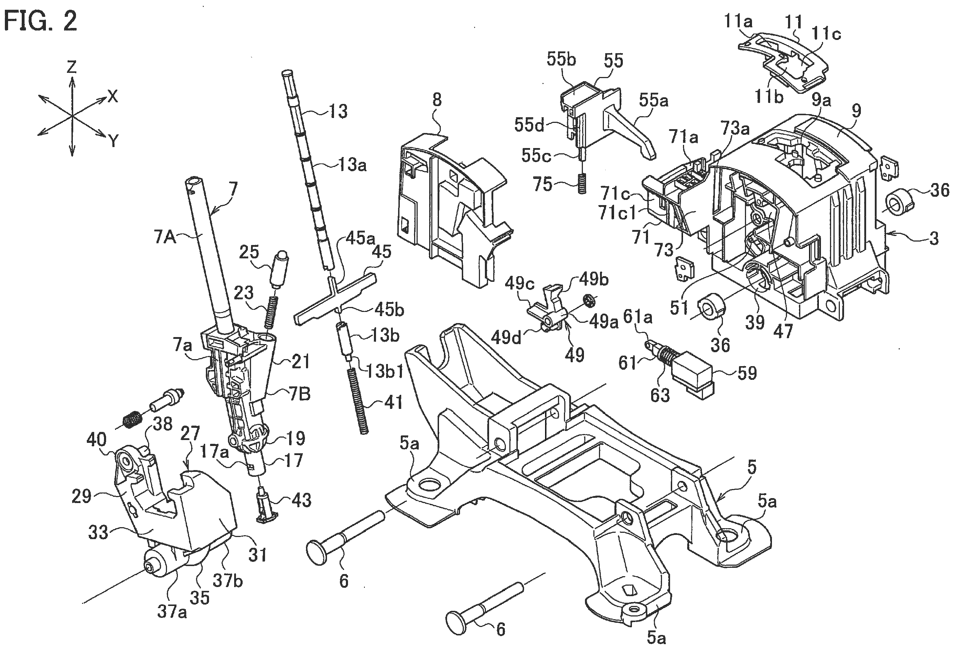

Fig. 1 illustrates an internal configuration of a gearshift lever device 1 used in a vehicle (an automobile). In the following descriptions, "front-rear direction" and "right-left direction" respectively correspond to a front-rear direction and a right-left direction of the vehicle in which the gearshift lever device 1 is mounted. In Fig. 2, an arrow X indicates the right-left direction (select direction), an arrow Y indicates the front-rear direction (shift direction), and an arrow Z indicates a top-down direction (vehicle top-down direction). In the gearshift lever device 1, a housing 3 is assembled on a base 5 illustrated in Fig. 2 with fix pins 6. The base 5 is fixed on an unillustrated vehicle body using mounting portions 5a. A lower portion of a gearshift lever 7 is inserted to the housing 3. A cover 8 is put on one opening in the right-left direction X of the housing 3.

As illustrated in Fig. 2, an upper surface portion 9 of the housing 3 has a curved concave shape, which is an arc shape in the front-rear direction Y. A cover panel 11 is put on the upper surface portion 9. An auto mode shift path 11a for automatic transmission operation and a manual mode shift path 11b for manual transmission operation are formed on the cover panel 11. A D (drive) range of the auto mode shift path 11a and a neutral position of the manual mode shift path 11b are connected through a select operation shift path 11c.

The auto mode shift path 11a is long in the front-rear direction Y, and the manual mode shift path 11b is positioned around a rear portion of the auto mode shift path 11a and has a shorter length in the front-rear direction Y than the auto mode shift path 11a. An opening 9a corresponding to the auto mode shift path 11a, the manual mode shift path 11b, and the select operation shift path 11c is formed in the upper surface portion 9 of the housing 3.

The gearshift lever 7 includes a lever main body 7A, which is a cylinder and is hollow along the entire length in an axial direction, and a resin molded body 7B, which is molded of resin integrally on a lower outer circumference of the lever main body 7A. A compression rod 13 is inserted to the inside of the lever main body 7A while being movable in the axial direction. In the resin molded body 7B, a cylindrical portion 17 is formed on a lower end portion, and a spherical portion 19 is formed next to an upper portion of the cylindrical portion 17.

In the resin molded body 7B, a tube portion 21 is obliquely formed on a side portion above the spherical portion 19. A check spring 23 and a check pin 25 that is pushed in an upward projecting direction by the check spring 23 are housed in the tube portion 21. The check pin 25 is engaged with an unillustrated check groove formed in the housing 3.

The resin molded body 7B is supported by a select block 27. The select block 27 includes a front wall portion 29, a rear wall portion 31, and a bottom wall portion 33. A spherical reception portion 35 that receives the spherical portion 19 is formed on the bottom wall portion 33. A cylindrical portion 17 is inserted to penetrate through a through hole formed in the middle of the spherical reception portion 35. The through hole of the spherical reception portion 35 is formed to be greater than an outer diameter of the cylindrical portion 17 so as to allow the cylindrical portion 17 to be moved in the right-left direction when the gearshift lever 7 is moved in the select operation shift path 11c in the right-left direction.

A lower end of the lever main body 7A reaches a center position of the spherical portion 19. A cylindrical space in the cylindrical portion 17 of the resin molded body 7B is continuously formed in the spherical portion 19, and the space is continued to the internal space of the lever main body 7A. With the spherical portion 19 sliding and rotating in the front-rear and right-left directions relative to the spherical reception portion 35, the gearshift lever 7 is moved in the front-rear direction (shift direction) Y and the right-left direction (select direction) X.

Shaft portions 37a, 37b extending in the right-left direction X are formed in right and left sides of the spherical reception portion 35. In the select block 27, the shaft portions 37a, 37b are rotatably supported by a shaft hole 39 of the housing 3 with bushes 36. This allows the select block 27 to be shifted in the front-rear direction Y about the shaft portions 37a, 37b.

As described above, the gearshift lever 7 is moved in the right-left direction (select direction) X about the spherical portion 19. When the gearshift lever 7 is moved from the auto mode shift path 11a in the left direction to the manual mode shift path 11b, the fitting of the resin molded body 7B and the select block 27 is released. On the other hand, when the gearshift lever 7 is moved from the manual mode shift path 11b in the right direction to the auto mode shift path 11a, the resin molded body 7B is fitted to the select block 27. The fitting of the resin molded body 7B and the select block 27 is made by inserting an upper portion of the resin molded body 7B to a space between the front wall portion 29 and the rear wall portion 31 of the select block 27.

With the gearshift lever 7 moved in the front-rear direction while the resin molded body 7B is fitted to the select block 27, the select block 27 is moved together in the front-rear direction about the shaft portions 37a, 37b. This allows for shift change in an auto mode. On an upper end of the front wall portion 29 of the select block 27, a cable coupling portion 40 to which one end of an unillustrated cable is to be coupled using a cable pin 38 is formed. The other end of the cable is coupled to an unillustrated automatic transmission.

An unillustrated operation nob is formed on an upper portion of the gearshift lever 7, and the compression rod 13 is moved downward by pressing an operation button as an operation portion formed on the operation knob. The compression rod 13 is divided into a rod upper portion 13a and a rod lower portion 13b that is shorter than the rod upper portion 13a, and a position pin 45 extending in the right-left direction X is arranged between the rod upper portion 13a and the rod lower portion 13b. The position pin 45 includes insertion protrusions 45a, 45b formed on the top and the bottom of its middle part in the right-left direction, and the insertion protrusions 45a, 45b are respectively inserted to insides of the rod upper portion 13a and the rod lower portion 13b.

A through hole 7a that is long in the top-down direction Z is formed in a part corresponding to the resin molded body 7B of the gearshift lever 7. The through hole 7a penetrates the lever main body 7A and the resin molded body 7B at a position above the spherical portion 19. The position pin 45 is inserted to the through hole 7a while being movable in the top-down direction Z. The position pin 45 projects outside the resin molded body 7B from the through hole 7a, and the projecting parts around tip ends are inserted to a position gate 47 of the housing 3. The position pin 45 is moved inside the position gate 47 by operation of the gearshift lever 7. Fig. 1 illustrates a state where the gearshift lever 7 is shifted in a parking position, and in this state, the movement in the front-rear direction Y of the position pin 45 in the position gate 47 is restricted.

In the gearshift lever 7, a coil spring 41 as an elastic body is housed below the rod lower portion 13b of the compression rod 13. The coil spring 41 pushes the compression rod 13 upward. During the pushing, a protrusion 13b1 projecting downward from a lower end of the rod lower portion 13b is inserted to an upper portion of the coil spring 41. A stopper 43 as a support member attached on a lower end of the gearshift lever 7 prevents the coil spring 41 from falling out.

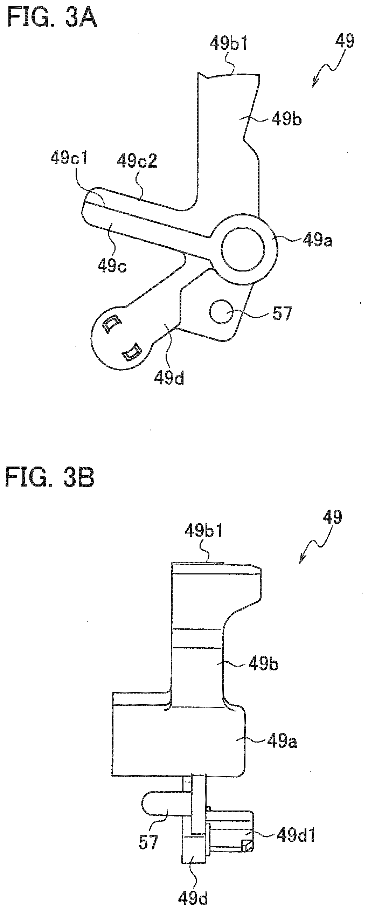

A shift-lock lever 49 is mounted below the position gate 47 in the housing 3. The shift-lock lever 49 is for preventing the gearshift lever 7 from moving from the parking position when parking the vehicle. The shift-lock lever 49 is rotatably supported by a rotation support shaft 51 projecting in the right-left direction X from side walls of the housing 3. As illustrated in Figs. 3A to 3C, the shift-lock lever 49 includes a cylindrical shaft insertion portion 49a that is rotatably supported by the rotation support shaft 51.

In different positions around the shaft insertion portion 49a, a first arm 49b, a second arm 49c, and a third arm 49d respectively extend in directions away from a central axis of the shaft insertion portion 49a. In the assembly state in Fig. 1, the first arm 49b extends upward from the top of the shaft insertion portion 49a while being slightly inclined forward. The whole body of the first arm 49b is a substantially rectangular parallelepiped that is long in the top-down direction Z, and the first arm 49b includes a position pin contact portion 49b1 in an upper end portion with which the position pin 45 comes into contact from the above. A shift-lock portion is thus formed. In the first arm 49b, a rear wall around the shaft insertion portion 49a is opposed to an inclined wall 53 formed in a lower portion of the position gate 47.

The second arm 49c is formed in a substantially plate shape in which the plate width is in the top-down direction Z, and in the assembly state in Fig. 1, the second arm 49c extends forward from a front portion of the shaft insertion portion 49a in a substantially horizontal manner. A top surface 49c1 of the second arm 49c is a flat surface. A flange 49c2 standing upright from the top surface 49c1 is formed on a side edge in a farther side of the paper surface of the top surface 49c1 in Fig. 1. The shift-lock lever 49 is rotated with the top surface 49c1 of the second arm 49c pressed by the later-described pressing arm 55a of a forcible release lever 55 from the above. Namely, the second arm 49c includes the top surface 49c1 serving as a pressed portion that is pressed by the pressing arm 55a.

As illustrated in Fig. 3B, the third arm 49d is formed in a substantially plate shape in which the plate width is in the right-left direction X, and the third arm 49d includes a pin 57 projecting in a left direction in Fig. 3B around the shaft insertion portion 49a. A plunger 61 moving back and forth in the front-rear direction Y from the solenoid 59 is coupled to the pin 57. A coupling hole 61a is formed in a tip end of the plunger 61, and the pin 57 is inserted to the coupling hole 61a.

In the solenoid 59, when the plunger 61 is set in a forward position by a pressing spring 63 in a non-energized state, the shift-lock state in Fig. 1 is maintained. The solenoid 59 is energized when a brake pedal is stepped down at the start-up of an engine, and then the plunger 61 is moved backward against the pressing spring 63. Consequently, the shift-lock lever 49 is rotated, and the position pin contact portion 49b1 of the first arm 49b is moved out from the position opposed to the position pin 45. The shift-lock is released in this way.

In the assembly state in Fig. 1, the third arm 49d extends downward from the bottom of the shaft insertion portion 49a while being slightly inclined forward. A damper 65 formed of elastically deformable rubber or the like is attached on a tip end of the third arm 49d. The tip end of the third arm 49d is formed in a substantially circle in side view, and the damper 65 is formed in a circle having a greater diameter than the diameter of the circle of the third arm 49d. As illustrated in Fig. 1, the tip end of the third arm 49d is positioned between a pair of rotation restriction wall portions 67, 69 formed in the housing 3.

When the plunger 61 is in the forward position as illustrated in Fig. 1, the damper 65 is in contact with the rotation restriction wall portion 69 in a front side. In this state, the damper 65 and the rotation restriction wall portion 67 in a rear side are away from each other. The pair of rotation restriction wall portions 67, 69 are positioned to be opposed to each other, and the rotation restriction wall portion 67 in the rear side is formed in an arc shape on an outer circumferential side of the shaft hole 39. With the shift-lock lever 49 rotated, an outer circumferential surface of the circular damper 65 comes into contact with either of the rotation restriction wall portions 67, 69, and thus contact noises (operation noises) are reduced.

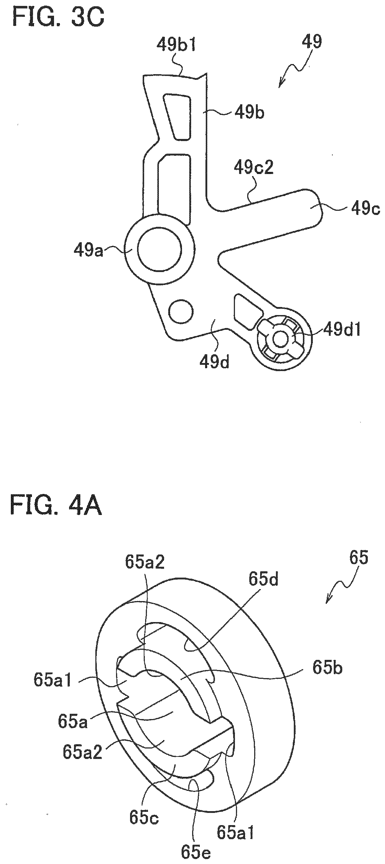

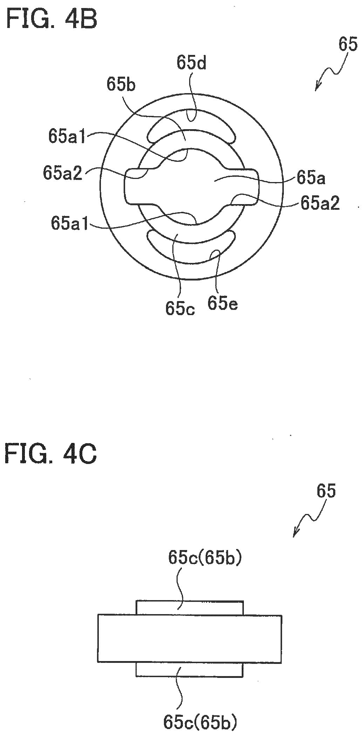

As illustrated in Figs. 4A and 4B, in the damper 65, an attachment hole 65a is formed to penetrate the center of the damper 65. An attachment protrusion 49d1 of the third arm 49d illustrated in Fig. 3C is fitted into the attachment hole 65a to attach the damper 65 to the third arm 49d. The attachment hole 65a includes a circular hole portion 65a1 in the center, and a rectangular hole portion 65a2 is formed such that two ends thereof stick out in the right-left direction X from right and left sides of the circular hole portion 65a1 in Fig. 4B.

In two sides above and below the attachment hole 65a in Fig. 4B, arc shaped projection portions 65b, 65c are formed to respectively project toward a front side and a back side of the paper surface. Inner circumferential edges of the projection portions 65b, 65c form the circular hole portion 65a1, and two ends of each of the projection portions 65b, 65c reach corresponding side edges of the rectangular hole portion 65a2. As illustrated in Figs. 4A and 4B, arc shaped slits 65d, 65e are formed to penetrate the damper 65 in corresponding outer circumference sides, which are in the opposite side of the attachment hole 65a, of the projection portions 65b, 65c.

When the damper 65 is attached to the attachment protrusion 49d1 of the third arm 49d, the slits 65d, 65e are positioned to be respectively opposed to the pair of rotation restriction wall portions 67, 69 illustrated in Fig. 1. Consequently, when the shift-lock lever 49 is rotated and the damper 65 comes into contact with the pair of rotation restriction wall portions 67, 69, the damper 65 is elastically deformed easily by the slits 65d, 65e. This makes it possible to more efficiently reduce the contact noises (operation noises).

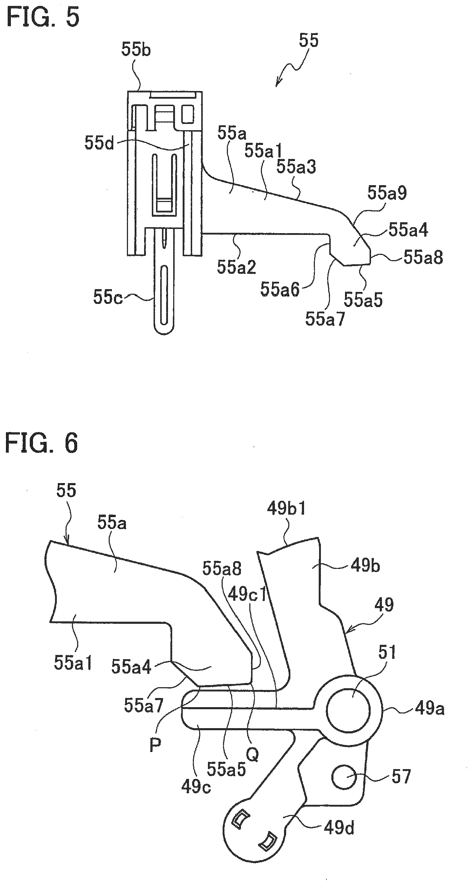

The forcible release lever 55 is attached to a release lever attachment portion 71 formed in front of the housing 3. As illustrated in Fig. 2, a recess part 71a that is recessed downward is formed in the release lever attachment portion 71. As illustrated in Fig. 5, the forcible release lever 55 includes a block shaped main body portion 55b, and the main body portion 55b is movably inserted to the recess part 71a from the above. The forcible release lever 55 includes the above-described pressing arm 55a projecting rearward from the main body portion 55b. The pressing arm 55a is inserted to an elongate hole 73a formed in a front wall 73 of the housing 3. The pressing arm 55a is movable in the top-down direction Z within the elongate hole 73a that is long in the top-down direction Z.

A guide pin 55c projecting downward is formed in a lower portion of the forcible release lever 55. With the main body portion 55b inserted to and arranged in the recess part 71a, the guide pin 55c penetrates through a lower wall 71b of the release lever attachment portion 71. The guide pin 55c between the main body portion 55b and the lower wall 71b is provided with a return spring 75 that pushes the main body portion 55b upward.

Thus, when the main body portion 55b is pushed downward, the whole body of the forcible release lever 55 is moved downward with respect to the housing 3 against the return spring 75. Once stopping the downward pushing of the main body portion 55b, the whole body of the forcible release lever 55 is moved upward by being pushed by the return spring 75. A guide protrusion 55d that is long in the top-down direction Z is provided on a side portion of the main body portion 55b. On the other hand, a guide hole 71c1 that is long in the top-down direction Z is formed in a side wall 71c of the release lever attachment portion 71. The guide protrusion 55d serves as a guide for the upward and downward movements of the forcible release lever 55 by being inserted to the guide hole 71c1 and moved in the top-down direction Z.

As illustrated in Fig. 5, the pressing arm 55a projects rearward from the main body portion 55b and has a substantially plate shape in which the plate width is in a direction orthogonal to the paper surface in Fig. 5. As illustrated in Fig. 5, the pressing arm 55a includes an arm portion 55a1 extending rearward from the main body portion 55b. In the arm portion 55a1, a lower edge 55a2 is substantially horizontal, and an upper edge 55a3 is inclined such that a tip end side is positioned lower than a portion closer to the main body portion 55b. Namely, the dimension in the top-down direction Z of the arm portion 55a1 is decreased toward the tip end side.

The tip end side of the arm portion 55a1 includes a pressing portion 55a4 bending downward from the arm portion 55a1. The pressing portion 55a4 includes a pressing surface 55a5 on a tip end lower portion. The pressing surface 55a5 is an inclined surface that is slightly inclined such that a tip end side in a right side in Fig. 6 is positioned higher than a base end side in a left side in Fig. 6. Consequently, in the shift-lock lever 49 in the shift-lock position in Figs. 1 and 6, a distance between the top surface 49c1 of the second arm 49c and the pressing surface 55a5 is greater toward the right side in Fig. 6 and is smaller toward the left side in Fig. 6.

The pressing portion 55a4 includes a first vertical wall 55a6 extending downward from an end portion of the lower edge 55a2 of the arm portion 55a1, and the first vertical wall 55a6 and one end portion of the pressing surface 55a5 are connected by a first inclined wall 55a7. A second vertical wall 55a8 is formed so as to extend upward from the other end of the pressing surface 55a5, and an upper end of the second vertical wall 55a8 and an end portion of the upper edge 55a3 of the arm portion 55a1 are connected by a second inclined wall 55a9.

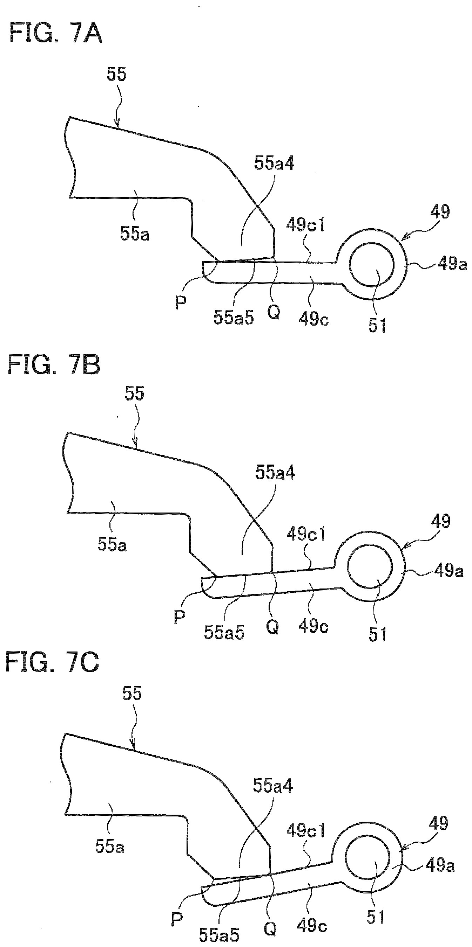

When the forcible release lever 55 is pushed downward in the state of Fig. 6, a first corner portion P, which serves as a first pressing portion between the pressing surface 55a5 and the first inclined wall 55a7, comes into contact with the top surface 49c1 first (Fig. 7A). Thereafter, when the forcible release lever 55 is further pushed, the pressing surface 55a5 gradually comes into contact with the top surface 49c1, and a second corner portion Q, which serves as a second pressing portion between the pressing surface 55a5 and the second vertical wall 55a8, comes into contact with the top surface 49c1 finally (Fig. 7B).

In this case, the shift-lock lever 49 is rotated counterclockwise about the rotation support shaft 51 in Fig. 6 to reach the state of Fig. 7B. In the state of Fig. 7B, with respect to the horizontal form in Figs. 1, 6, and 7A, the top surface 49c1 is inclined such that a portion closer to the rotation support shaft 51 is positioned higher than a tip end side. Thereafter, when the forcible release lever 55 is further pushed, the first corner portion P moves away from the top surface 49c1, and only the second corner portion Q presses the top surface 49c1 (Fig. 7C).

With the above-described counterclockwise rotation of the shift-lock lever 49, the position pin contact portion 49b1 of the first arm 49b is shifted forward with respect to the position pin 45. This allows the position pin 45 to be moved downward from the position in Fig. 1 without being restricted by the first arm 49b. Namely, since the shift-lock of the shift-lock lever 49 is released in this state, it is possible to move downward the compression rod 13 with the position pin 45 by pressing the operation button on the upper portion of the gearshift lever 7. This makes it possible to perform shift operations such as moving the gearshift lever 7 rearward from the parking position.

Next, operations of the gearshift lever device 1 are described.

The solenoid 59 is activated when the brake pedal is stepped down at the start-up of the engine and the gearshift lever 7 is in a P (parking) range of the auto mode shift path 11a, and then the shift-lock of the shift-lock lever 49 is released. When the operation button on the upper portion of the gearshift lever 7 is pressed in this state, the compression rod 13 is moved downward with the position pin 45. This allows the position pin 45 to be moved rearward in the position gate 47 and allows the gearshift lever 7 to be moved in the front-rear direction in the auto mode shift path 11a. While the compression rod 13 is moving downward, the coil spring 41 is compressed. Once stopping the operation of pressing the operation button, the compression rod 13 is pushed by the coil spring 41 and moved upward.

With the gearshift lever 7 moved in the front-rear direction in the auto mode shift path 11a, it is possible to select ranges in the auto mode. When the gearshift lever 7 in the D (drive) mode of the auto mode shift path 11a is moved to the manual mode shift path 11b by way of the select operation shift path 11c, the driving mode is shifted to the manual mode. In the manual mode, it is possible to manually perform shift-up and shift-down by moving the gearshift lever 7 in the front-rear direction.

When the gearshift lever 7 is moved in the front-rear direction in the auto mode shift path 11a, the gearshift lever 7 is shifted in the front-rear direction about the shaft portions 37a, 37b with the select block 27. When the gearshift lever 7 is moved in the front-rear direction in the manual mode shift path 11b and moved in the right-left direction in the select operation shift path 11c, the spherical portion 19 slides and rotates relative to the spherical reception portion 35 of the select block 27.

For example, when the solenoid 59 breaks down and the shift-lock of the shift-lock lever 49 cannot be released although the brake pedal is stepped down at the start-up of the engine, the forcible release lever 55 is pushed downward. With the forcible release lever 55 pushed downward, the pressing arm 55a presses the second arm 49c downward. In this way, the shift-lock lever 49 is rotated in a counterclockwise direction in Fig. 1, and the shift-lock is released.

Next, operations and effects are described.

The gearshift lever device 1 of this embodiment includes the position pin 45 that is moved downward inside the position gate 47 formed in the housing 3 by operating the operation button formed on the gearshift lever 7 and that enables the shift operation of the gearshift lever 7. Additionally, the gearshift lever device 1 includes the shift-lock lever 49 that is rotatably mounted in the housing 3 and restricts the position pin 45, which comes in contact with the shift-lock lever 49 from the above, from moving downward when the gearshift lever 7 is in the parking position. Moreover, the gearshift lever device 1 includes the forcible release lever 55 that forcibly rotates the shift-lock lever 49 and allows the position pin 45 to be moved downward by pressing the second arm 49c extending in a direction away from a rotational center of the shift-lock lever 49.

The forcible release lever 55 includes the pressing portion 55a4 that presses the second arm 49c. The pressing portion 55a4 includes the first corner portion P that presses a position away from the rotational center of the shift-lock lever 49 and the second corner portion Q that presses a position closer to the rotational center of the shift-lock lever 49 than the position pressed by the first corner portion P. When the pressing portion 55a4 presses the second arm 49c, the second corner portion Q comes into contact with the second arm 49c after the first corner portion P comes into contact with the second arm 49c.

In this case, as the pressing portion 55a4 presses the second arm 49c, the position in which the pressing surface 55a5 is pressed on the second arm 49c gradually comes closer to the rotational center of the shift-lock lever 49. In the shift-lock lever 49, assuming that the downward pressing strokes are equal, an angle of rotation of made by pressing a position closer to the rotational center is greater than an angle of rotation made by pressing a position farther from the rotational center. In this case, with the first corner portion P pressing the second arm 49c in a position farther from the rotational center of the shift-lock lever 49 first, a smoother operation of initial rotation of the shift-lock lever 49 is obtained.

Consequently, in this embodiment, when the angle of rotations of the shift-lock lever 49 are equal during the shift-lock release operation, a distance between the pressing surface 55a5 of the forcible release lever 55 and the top surface 49c1 of the shift-lock lever 49 can be smaller than a case where the shift-lock lever 49 is pressed only by the first corner portion P. When the second arm 49c is pressed only by the first corner portion P to rotate the shift-lock lever 49 to an angle position illustrated in Fig. 7C, a stroke for further downward pressing is required.

With the distance between the pressing surface 55a5 and the top surface 49c1 made smaller as described above, a moving distance (stroke) in the top-down direction Z of the forcible release lever 55 may be small. Thus, in this embodiment, even in a case where an enough space for a sufficient moving distance of the forcible release lever 55 is unavailable, the shift-lock still can be released forcibly.

In this embodiment, opposing parts of the pressing portion 55a4 and the second arm 49c are formed as flat surfaces, and a distance between the first corner portion P and the second arm 49c is smaller than a distance between the second corner portion Q and the second arm 49c. Thus, when the forcible release lever 55 is moved downward, the first corner portion P can more reliably come into contact first with the second arm 49c and the second corner portion Q can come into contact thereafter with the second arm 49c.

In the shift-lock lever 49 of this embodiment in the shift-lock state in which the downward movement of the position pin 45 is restricted, a surface of the second arm 49c opposed to the pressing portion 55a4 is a horizontal surface. Additionally, the pressing surface 55a5 of the pressing portion 55a4 opposed to the horizontal surface is an inclined surface that is inclined with respect to the horizontal surface. In this case, since the pressing portion 55a4 presses the top surface 49c1 of the second arm 49c as the horizontal surface downward, the operation of initial rotation of the shift-lock lever 49 is smoother than a case where the top surface 49c1 is inclined with respect to the horizontal surface.

Although the embodiment of the present invention is described as above, the embodiment is merely an example described for facilitating understanding of the present invention, and the present invention is not limited to the embodiment. The technical scope of the present invention is not limited to the specific technical matters disclosed in the above-described embodiment and includes various modifications, changes, and alternative techniques that may be easily drawn from the technical matters.

For example, the pressing surface 55a5 between the first corner portion P and the second corner portion Q of the pressing portion 55a4 of the forcible release lever 55 may be formed as a recess portion that is recessed upward in Fig. 6. In this case, when both the first corner portion P and second corner portion Q are in contact with the second arm 49c as illustrated in Fig. 7B, a portion as the recess portion between the first corner portion P and the second corner portion Q is not in contact with and has a distance from the second arm 49c.

Namely, the pressing portion 55a4 of the forcible release lever 55 may at least include a portion corresponding to the first corner portion P and a portion corresponding to the second corner portion Q. In other words, the pressing portion 55a4 may have a configuration in which pin shaped portions respectively extending in the top-down direction Z are formed in the portion corresponding to the first corner portion P and the portion corresponding to the second corner portion Q.

In this case, when the shift-lock is released, a tip end (lower end) of the pin shaped portion formed in the portion corresponding to the first corner portion P comes into contact with the second arm 49c first (corresponding to Fig. 7A). Thereafter, a tip end (lower end) of the pin shaped portion formed in the portion corresponding to the second corner portion Q comes into contact with the second arm 49c (corresponding to Figs. 7B and 7C).

Although the top surface 49c1 of the shift-lock lever 49 is a horizontal surface and the pressing surface 55a5 is an inclined surface in the state of before shift-lock release in Fig. 6, the opposite configuration may be applied. Namely, in the state of before shift-lock release, the pressing surface 55a5 may be a horizontal surface and the top surface 49c1 of the shift-lock lever 49 may be an inclined surface.

When the top surface 49c1 is an inclined surface, the top surface 49c1 is inclined such that a portion closer to the rotational center of the shift-lock lever 49 is positioned lower. Thus, the distance between the top surface 49c1 of the shift-lock lever 49 and the pressing surface 55a5 is greater toward the right side in Fig. 6 and is smaller toward the left side in Fig. 6. Even in the case where the top surface 49c1 is an inclined surface, the pressing surface 55a5 between the first corner portion P and the second corner portion Q may be formed as the recess portion that is recessed upward in Fig. 6.

## Claims

1. A gearshift lever device (1), comprising:
a position pin (45) that, when an operation portion formed on a gearshift lever (7) is operated, moves downward inside a position gate (47) formed in a housing (3) and thereby enables a shift operation of the gearshift lever (7);
a shift-lock lever (49) that is rotatably mounted in the housing (3) and restricts downward movement of the position pin (45) which comes in contact with the shift-lock lever (49) from above, when the gearshift lever (7) is in a parking position; and
a forcible release lever (55) that presses a pressed portion extending in a direction away from a rotational center of the shift-lock lever (49) and thereby forcibly rotates the shift-lock lever (49) to allow the position pin (45) to move downward, wherein
the forcible release lever (55) includes a pressing portion (55a4) that presses the pressed portion,
the pressing portion (55a4) includes a first pressing portion (P) that presses a position away from the rotational center of the shift-lock lever (49) and a second pressing portion (Q) that presses a position closer to the rotational center of the shift-lock lever (49) than the position pressed by the first pressing portion (P), and
when the pressing portion (55a4) presses the pressed portion, the first pressing portion (P) first comes into contact with the pressed portion, and thereafter the second pressing portion (Q) comes into contact with the pressed portion.

2. The gearshift lever device (1) according to claim 1, wherein
opposed parts of the pressing portion(55a4) and the pressed portion are formed as flat surfaces, and a distance between the first pressing portion (P) and the pressed portion is smaller than a distance between the second pressing portion (Q) and the pressed portion.

3. The gearshift lever device (1) according to claim 2, wherein
in the shift-lock lever (49) in a shift-lock state in which the downward movement of the position pin (45) is restricted, a surface of the pressed portion opposed to the pressing portion (55a4) is a horizontal surface, and a surface of the pressing portion (55a4) opposed to the horizontal surface is an inclined surface inclined with respect to the horizontal surface.
